# EUROPEAN PATENT SPECIFICATION

(11) **EP 0 618 465 B1**
(45) Date of publication and mention of the grant of the patent: **27.05.1998**
(21) Application number: 94302329.1
(22) Date of filing: 31.03.1994
(51) Int. Cl.: G02B 6/20, G02B 6/02

(54) **Fluid filled optical waveguide**
Flüssigkeitsgefüllter optischer Wellenleiter
Guide d'ondes rempli de fluide

(30) Priority: 01.04.1993 JP 98603/93
(43) Date of publication of application: 05.10.1994
(73) Proprietor: BRIDGESTONE CORPORATION, Tokyo 104 (JP)
(72) Inventor: Ishiharada, Minoru, Kodaira-shi, Tokyo (JP); Tanuma, Itsuo, Sayama-shi, Saitama-ken (JP); Naito, Kazuo, Kawasaki-shi, Kanagawa-ken (JP)
(74) Representative: Stoner, Gerard Patrick

(56) References cited:
- EP-A- 0 246 552
- WO-A-93/12446
- DE-A- 3 634 651
- US-A- 4 927 231
- PATENT ABSTRACTS OF JAPAN vol. 12, no. 100 (P-683) 2 April 1988 & JP-A-62 231 904 (BRIDGESTONE) 12 October 1987
- PATENT ABSTRACTS OF JAPAN vol. 9, no. 253 (P-395) 11 October 1985 & JP-A-60 103 315 (MITSUBISHI YUKA) 7 June 1985

## Description

This invention generally relates to optical waveguides having a fluid core, and more particularly, to an optical waveguide hose having a fluid core which is designed to prevent penetration of gas into the core, to help maintain its function over a wide temperature range and a long period of time and with good flexibility.

Well-known fiber optics include optical fibers of inorganic glass systems such as quartz glass and multi - component glass and optical fibers of plastic systems such as polymethyl methacrylate and polystyrene. These are all solid optical fibers wherein both the core and the cladding are solid materials. Although these optical fibers have satisfactory characteristics, they are limited in flexibility because they are formed from glass or hard plastics. Also, when it is desired to increase the diameter for transmitting a large quantity of light, a plurality of optical fibers each having a diameter of about 10 to 1,000 µm must be bundled. The optical fiber bundle has a space left among fibers even when fibers are packed at a possible maximum packing density and thus has a reduced effective inlet surface area for receiving light. The bundle is then low in efficiency and rather expensive.

As an alternative to the all-solid optical fibres, we proposed in US-A-4,009,382 and US-A-3,814,497 optical waveguide hoses using a normally-liquid light transmitting medium. See also US-A-4927231. The liquid system optical fiber includes a cladding in the form of a flexible hollow tube and a liquid core therein having a higher index of refraction than the cladding. Opposite end openings of the cladding are closed with window members. This allows the fiber to have a large diameter and a large effective light-receiving area and the fiber is thus highly efficient and cost effective.

Although the liquid system optical fiber had excellent features as mentioned above, it has the problem that since its stiffness is provided by a cladding in the form of a flexible hollow tubular member, gases can penetrate into the core liquid to lower its transparency due to a change in the service environment temperature during a long period of use. This is because the core is liquid and thus has a higher coefficient of expansion than the hollow tubular cladding generally formed of resinous material. At low temperatures, the volume of the core liquid is smaller than the interior volume of the cladding so that the hollow interior of the cladding is under negative pressure, encouraging gases to penetrate thereto through the cladding wall, creating bubbles in the core liquid. Bubble formation is facilitated particularly when the temperature is once elevated and then decreased.

GB-A-1,450,608, for example, proposed a liquid system optical fiber aiming to solve the gas penetration problem. This optical fiber is provided with a core liquid reservoir connected to the hollow tubular cladding. The reservoir makes up the core liquid when the core liquid decreases its volume at low temperatures, preventing the hollow interior of the cladding from becoming negative in pressure and thus preventing gas penetration into the core liquid.

This optical fiber, however, required to form an aperture in the cladding for liquid communication before the reservoir could be connected to the hollow tubular cladding. This aperture caused light scattering and detracted from transparency. The attachment of the reservoir added to the weight and cost.

The general aim of the invention as defined in claim 1 is to provide new constructions of fluid-filled optical waveguide, with low light scattering. Other preferred aims include the inhibition of gas penetration to the waveguide interior, good transparency, light weight, low cost and long life.

One general proposal herein is the use of an elastic material for the cladding, whereby the cladding is elastically deformable to accommodate thermal expansion and contraction of the core fluid. Suitable examples of elastic cladding materials are disclosed herein.

In particular, the cladding material may be sufficiently easily and elastically deformable to follow the thermal volume changes of the fluid such that pressure drops causing gas penetration of the cladding do not occur as temperature falls. Elastomeric, or rubbery elastic, materials are preferred.

In our work with an optical waveguide hose wherein a hollow tubular cladding is filled with a core fluid having a higher index of refraction than the cladding and opposite end openings of the cladding are closed with sealing plugs, we have found that by making the cladding of a material having sufficient elasticity or elastomeric properties, e.g. rubbery elasticity, at the service temperature of the hose, the cladding material having rubber elasticity can itself accommodate changes in the internal pressure resulting from a change in an environment temperature due to a difference in coefficient of thermal expansion between the core fluid and the cladding material. More particularly, at low temperature, the internal pressure lowers toward negative, but the tube is deformable enough to mitigate the internal pressure drop. As the temperature rises, the core material increases its volume and the cladding can follow expansion by elastic deformation. When the temperature then drops again, the cladding follows contraction of the core. In this way the internal pressure is maintained. It never happens that the hollow interior of the cladding becomes negative in pressure and gases penetrate through the cladding wall to develop bubbles in the core fluid. Then an optical waveguide hose which remains transparent over a wide range of temperature and flexible even at a large diameter can be manufactured at low cost.

### BRIEF DESCRIPTION OF THE DRAWINGS

FIG. 1 is a schematic axial cross section of an optical waveguide hose according to one embodiment of the invention.

FIG. 2 is a schematic axial cross section of an optical waveguide hose according to another embodiment of the invention.

FIG. 3 is a schematic axial cross section of an optical waveguide hose according to a further embodiment of the invention.

### DETAILED DESCRIPTION

An optical waveguide hose includes a hollow tubular cladding made of a material which exhibits elasticity at the working temperature of the hose. The cladding is filled with a core of a fluid having a higher index of refraction than the cladding. A sealing plug is mated with each end opening of the cladding.

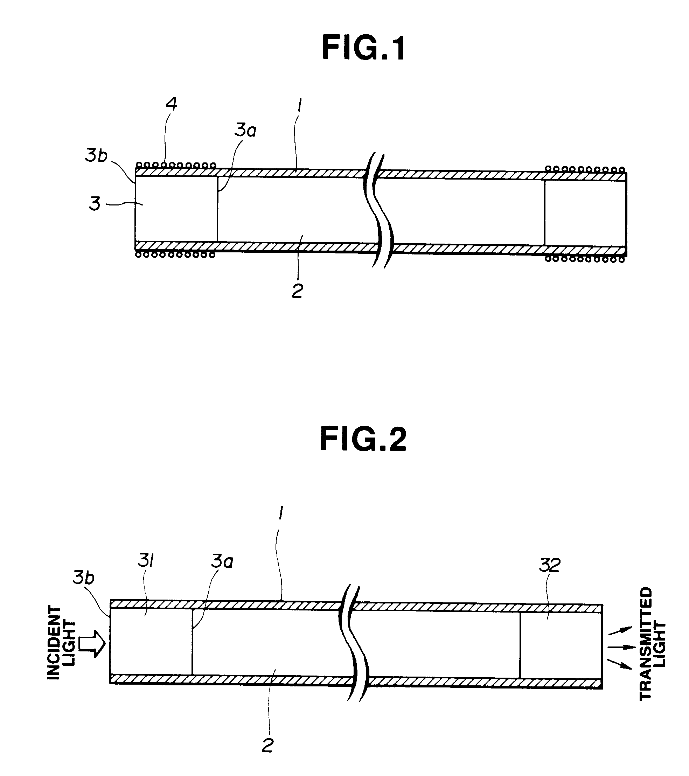

Referring to FIG. 1, there is illustrated a basic structure of an optical waveguide hose according to the present invention. The hose is shown in FIG. 1 as comprising a hollow tubular cladding 1 having opposite end openings, a fluid core 2 filled in the cladding 1, and a sealing plug 3 mated with each end opening of the cladding 1 for closing the openings for maintaining the interior pressure of the cladding hollow interior. A clamp 4 is fastened around each cladding end for preventing release of the sealing plug 3 and leakage of the core fluid.

The hollow tubular cladding 1 is made of a material having rubber elasticity, over its entirety at the working temperature (usually - 50 to 150°C, especially - 30 to 120°C) of the hose. Of course, it is preferred that the cladding material be shapable into a tubular form, have a low index of refraction and be resistant against attack by the core fluid. It is also preferred that the cladding material have sufficient gas barrier properties to prevent gas permeation. A choice of a cladding material having no substantial difference in coefficient of thermal expansion from the core fluid provides a synergistic effect coupled with its rubber elasticity. In this regard, it is preferred to use a cladding material having a coefficient of thermal expansion which is 0.5 to 3 times that of the core fluid.

More preferably, the cladding material has a lower glass transition temperature (Tg) than the service temperature and has been physically and chemically crosslinked for preventing creep, especially having low creep at the maximum service temperature. Most preferably, the cladding material has a creep factor of up to 50%, especially up to 10%, provided that the creep factor is defined as X = (L2 - L1)/L2 × 100% wherein a member has a length L1 at initial and a length L2 when deformed.

Illustrative examples of cladding materials obtainable to meet the above-mentioned requirements include flexible polyvinyl chloride, polyethylene-vinyl acetate copolymers, polyurethane, natural rubber, polyisoprene rubber, polybutadiene rubber, styrene-butadiene copolymers, butyl rubber, halogenated butyl rubber, chloroprene rubber, acrylic rubber, epichlorohydrin rubber, ethylene - propylene rubber, EPDM, acrylonitrile-butadiene copolymers, fluororubber, and silicone rubber. Those having a lower index of refraction are more preferred, for example, silicone elastomers such as dimethylsiloxane polymers, methylphenylsiloxane polymers, and fluorosilicone polymers, polyvinylidene fluoride, polyvinyl fluoride, vinylidene fluoride - trifluoroethylene chloride copolymers, vinylidene fluoride - propylene hexafluoride copolymers, vinylidene fluoride-propylene hexafluoride - ethylene tetrafluoride terpolymers, ethylene tetrafluoride - propylene rubber, and fluorinated thermoplastic elastomers. These are available with rubber elasticity.

These cladding materials may be used alone or in admixture of two or more and formed as a single tube or multiple tubes. The interior surface of the cladding in contact with the core fluid is smoothed for the purpose of preventing light scattering, and also preventing swelling of the core fluid, and gas entry. Although suitable smoothing treatments may include double extrusion, treatment of the interior surface with reactive gas such as ClF₃, and surface treatment by plasma initiated polymerization, in the present invention a coating method is advantageously used since it is relatively easy to form a coating layer on the interior surface of the cladding tube. The coating materials suitable to this end include precursors of the above-mentioned rubber elasticity materials, liquid rubber, latex, and rubber coating compositions. For example, fluororubber, silicone rubber, and fluorosilicone rubber in solution form and liquid rubber may be used. The coating layer is preferably about 1 to 1000 µm thick.

Also a resinous material is applicable to the interior surface of a rubber elastic tube to form a thin layer thereon with the results being comparable to those of a cladding tube made solely of a rubber elastic material. The resin thin layer is preferably about 0.1 to 100 µm thick, especially about 1 to 10 µm thick.

For protecting the optical waveguide hose, the cladding on the outer surface may be covered with a coating material. For example, the cladding tube may be coated with any of plastics and elastomers. Alternatively, any of metal materials such as stainless steel and aluminum, plastics, and elastomers is shaped into an elongated hollow member in the form of a pipe, bellows or spirally wound wire, and the optical waveguide hose is inserted into the hollow member. It is also possible to form a thin layer of inorganic material on the outer surface of the cladding by plating, evaporation and sputtering.

These coating materials may be used alone or in combination with another material to form a composite cover.

The core fluid 2 with which the hollow interior of the tubular cladding 1 is filled is a liquid or flowing transparent material (fluid) having a higher index of refraction than the cladding material. Exemplary fluids include aqueous solutions of inorganic salts, polyhydric alcohols such as ethylene glycol and glycerine, silicone oils such as polydimethylsiloxane and polyphenylmethylsiloxane, hydrocarbons such as polyisobutylene, polyethers, polyesters, and liquid paraffin, halogenated hydrocarbons such as trifluoroethylene chloride oil, phosphates such as tris(chloroethyl) phosphate and trioctyl phosphate, and solutions of polymers (e.g., polyisobutylene) diluted with suitable solvents.

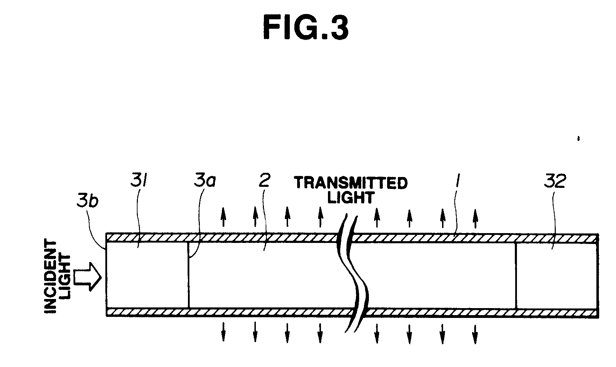

The material of which the sealing plug 3 is made may be selected from inorganic glasses, organic glasses, metals, inorganic materials and plastics, depending on a particular purpose. In one exemplary embodiment wherein plugs 31 and 32 serve as an inlet window through which incident light enters the light waveguide hose and an outlet window through which the transmitted light emerges outside as shown in FIG. 2, both the plugs must be transparent. In another embodiment wherein light emerges outside from the hose in a radial direction through the cladding wall as shown in FIG. 3, the tail plug 32 need not be transparent.

The material of the plugs which must be transparent include inorganic glasses such as quartz glass, multi-component glass, sapphire, and quartz; and organic glasses and transparent plastic materials such as polyethylene, polypropylene, ABS resins, acrylonitrile-styrene copolymer resins, styrene-butadiene copolymers, acrylonitrile-EPDM-styrene terpolymers, styrene-methyl methacrylate copolymers, methacrylic resins, epoxy resins, polymethyl pentene, allyl diglycol carbonate resins, spiran resins, amorphous polyolefins, polycarbonates, polyamides, polyacrylates, polysulfones, polyallyl sulfones, polyether sulfones, polyether imides, polyimides, polyethylene terephthalate, diallyl phthalate, fluororesins, polyester carbonates, and silicone resins. Preferred among these are inorganic glasses such as quartz glass, Pyrex® glass and multi - component glass because they are transparent, heat resistant and chemically stable so that they are chemically inert to reaction with the core fluid in contact therewith at the inner end 3a of the plug 3 or with gases or moisture in contact therewith at the outer end 3b of the plug 3 (in FIG. 1) and thus maintain good performance over a long period of time.

Where transparency is not necessary, use may be made of metals and ceramic materials as well as the above-mentioned materials. Plugs of opaque material are preferably polished or provided with a reflective film at the surface in contact with the core fluid in order to reflect light thereat to increase light emission from the lateral side.

The end clamps 4 are preferably provided for preventing release of the plugs or leakage of the core fluid and for preventing gases from penetrating through the interface between the cladding and the plugs. The clamps may be hose bands, wires, sleeves, O-rings, gaskets or other suitable means which are fastened, wound, fitted or otherwise applied around the cladding ends and the plugs to accomplish a mechanical seal or another seal by thermal shrinkage, adhesion or curing.

Many benefits are obtainable. The hose should be usable over a wide temperature range from low to high temperatures, since it maintains good light transmission over a wide temperature range. Hose may be mounted in a movable section of machinery, such as a robot arm where bending and extension are required, since it can have good flexibility. Hose is easy to install in a limited access area or within a machinery frame. For example, such hoses find application in electric appliances, vehicles and aircraft for light transmission and illumination, transmission of optical energy such as solar energy, and a variety of lighting purposes.

### EXAMPLES

Example 2 below constitutes an example of the present invention and is given by way of illustration and not by way of limitation.

### Comparative example 1

A hollow tubular cladding having an inner diameter of 6 mm, an outer diameter of 8 mm and a length of 3 m was formed from dimethylsilicone having a Tg of about -80°C. The cladding was charged with phenylmethylsilicone oil having a viscosity of 450 centipoise at 25°C and an index of refraction of 1.50 from one open end. The cladding was plugged with quartz rod pieces having a diameter of 6 mm and a length of 30 mm at both ends. The cladding end portions were tightly clamped by winding a metal wire thereon. This optical waveguide hose had a transmittance of 60% to light having a wavelength of 633 nm.

The hose was allowed to stand in a refrigerator at -30°C for 6 months. At the end of 6-month cold storage, the hose maintained high light transmittance without air penetration.

### Example 2

A hollow tube having an inner diameter of 6 mm, an outer diameter of 8 mm and a length of 3 m was formed from dimethylsilicone having a Tg of about -80°C. The tube on the interior surface was coated with fluororubber having a Tg of about -30°C to a thickness of about 50 µm. The cladding was charged with phenylmethyl-silicone oil having a viscosity of 450 centipoise at 25°C and an index of refraction of 1.50 from one open end. The cladding was plugged with quartz rod pieces having a diameter of 6 mm and a length of 30 mm at both ends. The cladding end portions were tightly clamped by winding a metal wire thereon. This optical waveguide hose had a transmittance of 85% to light having a wavelength of 633 nm.

The hose was allowed to stand in a refrigerator at -10°C for 6 months. At the end of 6-month cold storage, the hose maintained high light transmittance without air penetration. The hose was also subjected to a thermal cycling test between 120°C and -10°C for 500 hours. Again the hose maintained high light transmittance without air penetration.

### Comparative Example 3

A hollow tubular cladding having an inner diameter of 6 mm, an outer diameter of 7 mm and a length of 3 m was formed from an ethylene tetrafluoride - propylene hexafluoride copolymer having a Tg of about 200°C. The cladding was charged with trioctyl phosphate from one open end. The cladding was plugged with quartz rod pieces having a diameter of 6 mm and a length of 30 mm at both ends. The cladding end portions were tightly clamped by winding a metal wire thereon.

This optical waveguide hose was allowed to stand in a refrigerator at -5°C. After two days, about 1 ml of air penetrated into the hose.

There has been described an optical waveguide hose comprising a hollow tubular cladding made of a material having rubber elasticity at the service temperature which is filled with a core fluid having a higher index of refraction than the cladding and closed with sealing plugs at opposed ends. The hose is good in flexibility and handling, prevents gas penetration into the core fluid and thus maintains transparency in a wide temperature range over a long period of time, and is lightweight and inexpensive.

## Claims

1. An optical waveguide hose comprising :
a hollow cladding tube (1) of a cladding material having rubbery elasticity at the working temperature of the hose;
a core fluid (2) which fills the cladding tube and has a higher refractive index than the cladding material, and
sealing plugs (3;31,32) closing the end openings of the cladding tube (1);
characterised in that
the cladding tube's inner surface has a thin coating layer of elastic or resinous material to smooth said inner surface so as to inhibit light scattering.

2. An optical waveguide hose according to claim 1 in which the coating layer is of fluororubber, silicone rubber or fluorosilicone rubber.

3. An optical waveguide hose according to claim 1 or claim 2 in which the thin coating layer is of elastic material and from 1 to 1000µm thick.

4. An optical waveguide hose according to claim 1 in which the thin coating layer is of resinous material and from 0.1 to 100µm thick.

5. An optical waveguide hose according to any one of the preceding claims in which the cladding material has rubbery elasticity at working temperatures in the range -50 to 150°C.

6. An optical waveguide hose according to any one of the preceding claims in which the cladding material has a coefficient of thermal expansion 0.5 to 3 times that of the core fluid.

## Patentansprüche

1. Optischer Wellenleiter-Schlauch, umfassend:
ein hohles Mantelrohr (1) aus einem Mantelmaterial, das bei der Betriebstemperatur des Schlauchs gummiartige Elastizität aufweist;
eine Kernflüssigkeit (2), mit der das Mantelrohr gefüllt ist und die einen höheren Brechungsindex als das Mantelmaterial aufweist, sowie
Dichtungspfropfen (3, 31, 32), die die Endöffnungen des Mantelrohres (1) verschließen;
dadurch gekennzeichnet, daß die Innenfläche des Mantelrohres eine dünne Überzugsschicht aus elastischem oder harzartigem Material aufweist, um die Innenfläche so zu glätten, daß die Lichtstreuung gehemmt wird.

2. Optischer Wellenleiter-Schlauch nach Anspruch 1, bei dem die Überzugsschicht aus Fluor-, Silikon- oder Fluorsilikongummi besteht.

3. Optischer Wellenleiter-Schlauch nach Anspruch 1 oder 2, bei dem die dünne Überzugsschicht aus elastischem Material besteht und 1 bis 1.000 µm dick ist.

4. Optischer Wellenleiter-Schlauch nach Anspruch 1, bei dem die dünne Überzugsschicht aus harzartigem Material besteht und 0,1 bis 100 µm dick ist.

5. Optischer Wellenleiter-Schlauch nach einem der vorangegangenen Ansprüche, bei dem das Mantelmaterial bei Betriebstemperaturen im Bereich von -50 bis 150°C gummiartige Elastizität aufweist.

6. Optischer Wellenleiter-Schlauch nach einem der vorangegangenen Ansprüche, bei dem das Mantelmaterial einen Wärmeausdehnungskoeffizienten aufweist, der 0,5-bis 3-mal so groß wie jener der Kernflüssigkeit ist.

## Revendications

1. Tuyau flexible pour guide d'ondes optique, comprenant :
un tube creux de blindage (1) en un matériau de blindage ayant l'élasticité du caoutchouc à la température d'utilisation du tuyau flexible;
un fluide de l'âme (2) qui remplit le tube de blindage et a un plus fort indice de réfraction que le matériau du blindage, et
des bouchons d'étanchéité (3, 31, 32) fermant les ouvertures extrêmes du tube de blindage (1),
caractérisé en ce que
la surface interne du tube de blindage a une couche mince de revêtement en un matériau élastique ou résineux, pour lisser ladite surface interne afin d'inhiber la dispersion de la lumière.

2. Tuyau flexible pour guide d'ondes optique selon la revendication 1, où la couche de revêtement est en caoutchouc fluoré, en caoutchouc de silicone ou en caoutchouc de fluorosilicone.

3. Tuyau flexible pour guide d'ondes optique selon la revendication 1 ou la revendication 2, dans lequel la couche mince de revêtement est en un matériau élastique et a 1 à 1000 µm d'épaisseur.

4. Tuyau flexible pour guide d'ondes optique selon la revendication 1, dans lequel la couche de revêtement est en un matériau résineux et a 0,1 à 100 µm d'épaisseur.

5. Tuyau flexible pour guide d'ondes optique selon l'une quelconque des revendications précédentes, dans lequel le matériau de blindage a l'élasticité du caoutchouc à la température d'utilisation de l'ordre de -50 à 150°C.

6. Tuyau flexible pour guide d'ondes optique selon l'une quelconque des revendications précédentes, dans lequel le matériau de blindage a un coefficient de dilatation thermique de 0,5 à 3 fois celui du fluide.
